# EUROPEAN PATENT APPLICATION

(11) **EP 4 836 003 A1**
(43) Date of publication of application: **04.11.2026**
(21) Application number: 24911394.5
(22) Date of filing: 27.12.2024
(51) Int. Cl.: H01M 4/525, H01M 4/36, C01G 53/00, H01M 10/0525, H01M 4/485

(54) **TERNARY MATERIAL AND PREPARATION METHOD THEREFOR, LITHIUM-ION BATTERY, AND ELECTRIC DEVICE**

(30) Priority: 29.12.2023 CN 202311871074
(71) Applicant: BYD Company Limited, Shenzhen, Guangdong 518118 (CN)
(72) Inventor: YU, Xuyang, Shenzhen, Guangdong 518118 (CN); XIAO, Jing, Shenzhen, Guangdong 518118 (CN); GE, Liping, Shenzhen, Guangdong 518118 (CN); TIAN, Yecheng, Shenzhen, Guangdong 518118 (CN); HE, Kefeng, Shenzhen, Guangdong 518118 (CN)
(74) Representative: Taor, Simon Edward William
(86) International application number: PCT/CN2024/142962
(87) International publication number: WO 2025/140473

(57) **Abstract**

Provided is a ternary material. The chemical formula of the ternary material is LiNi_{1-x-y}CoₓMn_{y}MₐO₂, wherein 0<x≤0.1, 0<y≤0.1, 0<a≤0.05, and M is selected from one or more of Zr, Ti, Zn, Mg, Ta, V, W, Al and B; the ternary material comprises polycrystalline particles; and in an X-ray diffraction spectrum of the ternary material, the (108) diffraction peak at a diffraction angle 20 of (64±0.5)° and the (110) diffraction peak at a diffraction angle 20 of (65±0.5)° satisfy the following relational expression: (a). $0.8 < \frac{FWHM \left(108\right) + FWHM \left(110\right)}{2 θ \left(110\right) - 2 θ \left(108\right)} < 0.98$ (a)

## Description

This application claims priority to Chinese Patent Application No. 202311871074.8, filed with the China National Intellectual Property Administration on December 29, 2023 and entitled "TERNARY MATERIAL AND PREPARATION METHOD THEREFOR, POSITIVE ELECTRODE PLATE, LITHIUM-ION BATTERY, AND ELECTRIC DEVICE", which is incorporated herein by reference in its entirety.

### TECHNICAL FIELD

The present disclosure pertains to the field of energy storage technologies, and specifically, relates to a ternary material and a preparation method therefor, a lithium-ion battery, and a electric device.

### BACKGROUND

As an important component of a lithium-ion battery, a cathode material for the lithium-ion battery is also one of key factors affecting performance of the lithium-ion battery. Lithium nickel cobalt manganese oxide (ternary material) combines advantages of lithium manganese oxide, lithium cobalt oxide, and lithium nickel oxide, has a high specific capacity and a good discharge rate, and is currently a main cathode material for lithium-ion batteries.

High-nickelization is a main development trend of ternary materials, and high-nickelization can improve a specific capacity of the ternary material. However, an ionic radius of a nickel ion is close to that of a lithium ion, which is prone to causing lithium/nickel disordering. Higher nickel content indicates a more severe disordering phenomenon, which in turn affects orderliness of a structure of the ternary material and leads to poor cycle performance of a ternary lithium battery. Preparation of a high-nickel ternary material that takes both a high specific capacity and a long cycle life into consideration is of great significance.

### SUMMARY

A first aspect of the present disclosure provides a ternary material. A chemical formula of the ternary material is LiNi_{1-x-y}CoₓMn_{y}MₐO₂, where 0<x≤0.1, 0<y≤0.1, 0<a≤0.05, and M is one or more of Zr, Ti, Zn, Mg, Ta, V, Al, Y, W, and B. The ternary material includes polycrystalline particles. There are a (108) diffraction peak at a diffraction angle 2θ of (64±0.5)° and a (110) diffraction peak at a diffraction angle 2θ of (65±0.5)° in an X-ray diffraction spectrum of the ternary material. The (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$. The FWHM (108) is a full width at half maximum of the (108) diffraction peak at the diffraction angle 2θ of (64±0.5)°, and the FWHM (110) is a full width at half maximum of the (110) diffraction peak at the diffraction angle 2θ of (65±0.5)°.

According to a second aspect, the present disclosure provides a preparation method for the foregoing ternary material, including the following steps: (1) mixing a first lithium source with a transition metal precursor to obtain a first mixture, and adding a first dopant to the first mixture to obtain a first doped mixture, where the transition metal precursor includes a nickel element, a cobalt element, and a manganese element, a molar ratio of the nickel element to the cobalt element to the manganese element is (1-x-y):x:y, 0<x≤0.1, 0<y≤0.1, and a molar ratio of a lithium element in the first lithium source to a sum of the nickel element, the cobalt element, and the manganese element in the precursor ranges from (0.3 to 0.7):1; (2) mixing the first doped mixture with a second lithium source to obtain a second mixture, and performing first sintering on the second mixture in an oxygen-containing atmosphere to obtain a first sintered product, where a molar ratio of a lithium element in the second lithium source to the sum of the nickel element, the cobalt element, and the manganese element in the precursor ranges from (0.35 to 0.75):1, and the first lithium source and the second lithium source are allowed to be the same or different; (3) mixing the first sintered product with an optional second dopant, and performing second sintering in an oxygen-containing atmosphere to obtain a second sintered product; and (4) mixing the second sintered product with an optional third dopant, and performing third sintering in an oxygen-containing atmosphere to obtain the ternary material, where the first dopant, the second dopant, and the third dopant include M elements, M is one or more of Zr, Ti, Zn, Mg, Ta, V, Al, Y, W, and B, a ratio of a sum of molar amounts of the M elements in the first dopant, the second dopant, and the third dopant to a sum of molar amounts of the nickel element, the cobalt element, and the manganese element in the precursor is a:1, and 0<a≤0.05.

According to a third aspect, the present disclosure provides a positive electrode plate, including the foregoing ternary material, or the ternary material prepared based on the preparation method for the foregoing ternary material.

According to a fourth aspect, the present disclosure provides a positive electrode plate, including a ternary material. A chemical formula of the ternary material is LiNi_{1-x-y}CoₓMn_{y}MₐO₂, where 0<x≤0.1, 0<y≤0.1, 0<a≤0.05, and M is one or more of Zr, Ti, Zn, Mg, Ta, V, Al, Y, W, and B. The ternary material includes polycrystalline particles. There are a (108) diffraction peak at a diffraction angle 2θ of (64±0.5)° and a (110) diffraction peak at a diffraction angle 2θ of (65±0.5)° in an X-ray diffraction spectrum of the positive electrode plate. The (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$. The FWHM (108) is a full width at half maximum of the (108) diffraction peak at the diffraction angle 2θ of (64±0.5)°, and the FWHM (110) is a full width at half maximum of the (110) diffraction peak at the diffraction angle 2θ of (65±0.5)°.

According to a fifth aspect, the present disclosure provides a lithium-ion battery, including the foregoing positive electrode plate.

According to a sixth aspect, the present disclosure provides a electric device, including the foregoing lithium-ion battery.

In the ternary material in the present disclosure, transition metal and lithium are alternately arranged more regularly, there is less lithium/nickel disordering, and a specific capacity is higher. In addition, a layered structure formed by alternation of the transition metal and lithium is more stable, which can ensure that the ternary material has high energy density and a high cycle life. Compared with a conventional technology, the preparation method for the ternary material provided in the present disclosure has the following effects: First, a stepwise lithium mixing process allows the lithium source and a ternary material precursor to be mixed more uniformly, so that lithium ions are orderly embedded into a crystal lattice of the high-nickel ternary precursor, to alleviate lithium/nickel disordering. Second, a stepwise sintering process allows for a plurality of adjustments to a sintering conditions, which mitigates adverse impact of a continuous high temperature on lithium/nickel disordering in the ternary material, ensures consistent crystallinity inside and outside the ternary material, and is more conducive to formation of the ternary material of a stable and uniform structure. Third, a doping process stabilizes a crystal structure of the ternary material and improves cycle performance.

### BRIEF DESCRIPTION OF DRAWINGS

The accompanying drawings are used to provide further understanding of the present disclosure and constitute a part of the specification. Together with the following specific implementations, they are used to explain the present disclosure, but do not constitute a limitation on the present disclosure.
FIG. 1 is a 10000-fold magnified SEM image of a transition metal precursor in Example 1 of the present disclosure;
FIG. 2 is a 50000-fold magnified SEM image of a transition metal precursor in Example 1 of the present disclosure; and
FIG. 3 is a 10000-fold magnified SEM image of a ternary material prepared in Example 1 of the present disclosure.

### DESCRIPTION OF EMBODIMENTS

To make the technical problems resolved by the present disclosure, technical solutions, and beneficial effects clearer, the following describes the present disclosure in detail with reference to embodiments and accompanying drawings. It should be understood that specific embodiments described herein are merely used to explain the present disclosure but are not intended to limit the present disclosure.

Lithium nickel cobalt manganese oxide (ternary material) combines advantages of lithium manganese oxide, lithium cobalt oxide, and lithium nickel oxide, and is widely used in ternary materials for lithium-ion batteries. In a crystal structure of the ternary material, transition metal ions and lithium ions alternately occupy octahedral voids of the crystal structure and are arranged in layers. This atomic arrangement form endows the ternary material with excellent electrochemical performance. High-nickelization is one of main development directions of ternary materials. High nickel content can improve a specific capacity of the ternary material and increase an endurance mileage of the battery. However, an ionic radius of a nickel ion is close to that of a lithium ion, which is prone to causing lithium/nickel disordering. Higher nickel content indicates a more severe disordering phenomenon, which in turn affects orderliness of a structure of the ternary material and leads to poor cycle performance of a ternary lithium battery. Preparation of a high-nickel ternary material that takes both a high specific capacity and a long cycle life into consideration is of great significance.

A first embodiment of the present disclosure provides a ternary material. A chemical formula of the ternary material is LiNi1-x-yCoxMnyMaO2, where 0<x≤0.1, 0<y≤0.1, 0<a≤0.05, and M is one or more of Zr, Ti, Zn, Mg, Ta, V, Al, Y, W, and B. The ternary material includes polycrystalline particles. There are a (108) diffraction peak at a diffraction angle 2θ of (64±0.5)° and a (110) diffraction peak at a diffraction angle 2θ of (65±0.5)° in an X-ray diffraction spectrum of the ternary material. The (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$. The FWHM (108) is a full width at half maximum of the (108) diffraction peak at the diffraction angle 2θ of (64±0.5)°, and the FWHM (110) is a full width at half maximum of the (110) diffraction peak at the diffraction angle 2θ of (65±0.5)°.

The ternary material belongs to a hexagonal crystal system, where a (110) crystal face is related to a and b axes, and a (108) crystal face is more strongly related to a c axis. In this way, combination of the (110) crystal face and the (108) crystal face can reflect characteristics in three directions of a, b and c axes in crystal cells of the ternary material, and can be used to evaluate a crystal structure of the ternary material. Orderliness of a layered structure of the ternary material can be roughly determined, and rationality of atomic arrangement between layers can be evaluated. Clear crack peaks appear in two diffraction peaks of the (110) crystal face and the (108) crystal face in the XRD spectrum of the ternary material, which is a sign that the crystal structure of the ternary material reaches a suitable range. At this time, a regular layered structure formed by alternation of transition metal and lithium is formed in the ternary material. Through extensive experimental research, inventors of the present disclosure discover that when the (108) diffraction peak and the (110) diffraction peak satisfy the relational expression: $0.8 < \frac{FWHM \left(108\right) + FWHM \left(110\right)}{2 θ \left(110\right) - 2 θ \left(108\right)} \leq 0.98$, the transition metal and lithium in the ternary material are alternately arranged more regularly, there is less lithium/nickel disordering, and a specific capacity is higher. In addition, the layered structure formed by alternation of the transition metal and lithium is more stable, which can ensure that the ternary material has high energy density and a high cycle life.

In the present disclosure, the polycrystalline particle is a secondary spherical particle formed by agglomeration of a plurality of primary particles.

Specifically, in the relational expression, 2θ (110) indicates a specific position of the (110) diffraction peak in an X-ray diffraction spectrum actually obtained in an XRD test performed based on the ternary material. Similarly, 2θ (108) indicates a specific position of the (108) diffraction peak in an X-ray diffraction spectrum actually obtained in an XRD test performed based on powder of the ternary material.

In some preferred embodiments of the present disclosure, a chemical formula of the ternary material is LiNi_{1-x-y}CoₓMn_{y}MₐO₂, where 0<x≤0.1, 0<y≤0.05, 0<a≤0.05, and M is one or more of Zr, Ti, Zn, Mg, Ta, V, Al, Y, W, and B.

As content of a Ni element in the ternary material increases, the specific capacity of the ternary material significantly increases. However, as the content of the Ni element increases, a risk of lithium/nickel disordering also increases, leading to a decrease in the cycle life of the ternary material. Therefore, when the foregoing relational expression is satisfied, stability of the layered structure of the high-nickel ternary material and orderliness of interlayer arrangement of a transition metal element and lithium can be ensured, so that the ternary material has a higher specific capacity while also having a high cycle life.

In some preferred embodiments of the present disclosure, the (108) diffraction peak and the (110) diffraction peak satisfy the following relational expression: $0.85 < \frac{FWHM \left(108\right) + FWHM \left(110\right)}{2 θ \left(110\right) - 2 θ \left(108\right)} < 0.95$. The relational expression is within the foregoing preferred range, so that orderliness of the layered structure of the ternary material is high, stability of interlayer atomic arrangement of the transition metal is higher, and the ternary material has a higher specific capacity while also having a high cycle life.

In some preferred embodiments of the present disclosure, in the X-ray diffraction spectrum of the ternary material, the full width at half maximum FWHM (108) of the (108) diffraction peak at the diffraction angle 2θ of (64±0.5)° ranges from 0.1 to 0.2.

Specifically, the full width at half maximum FWHM (108) of the (108) diffraction peak at the diffraction angle 2θ of (64±0.5)° means a value of the full width at half maximum that is of the (108) diffraction peak at a position at a half-peak height of the (108) diffraction peak and that is parallel to a lateral axis for the diffraction angle 2θ in the X-ray diffraction spectrum. The FWHM (108) ranges from 0.1 to 0.2, so that the obtained ternary material is of a stable crystal structure, unobstructed lithium-ion deintercalation and intercalation channels, and good rate performance.

In some preferred embodiments of the present disclosure, in the X-ray diffraction spectrum of the ternary material, the full width at half maximum FWHM (110) of the (110) diffraction peak at the diffraction angle 2θ of (65±0.5)° ranges from 0.1 to 0.2.

Specifically, the full width at half maximum FWHM (110) of the (110) diffraction peak at the diffraction angle 2θ of (65±0.5)° means a value of the full width at half maximum that is of the (110) diffraction peak at a position at a half-peak height of the (110) diffraction peak and that is parallel to the lateral axis for the diffraction angle 2θ in the X-ray diffraction spectrum. The FWHM (110) ranges from 0.1 to 0.2, so that the obtained ternary material is of a stable crystal structure, unobstructed lithium-ion deintercalation and intercalation channels, and good rate performance.

In some preferred embodiments of the present disclosure, the ternary material is of an α-NaFeO₂ layered structure.

It may be understood that the X-ray diffraction spectrum of the ternary material in the present disclosure may be obtained by scanning with a copper-target X-ray generator at a scanning rate of 2°/min to 5°/min in a range of 3° to 90°.

In some preferred embodiments of the present disclosure, a particle size (D50) of the ternary material ranges from 5 µm to 20 µm, preferably 8 µm to 15 µm. The particle size is within this range, which can ensure that the ternary material has better compaction density.

According to a second aspect of the present disclosure, a preparation method for a ternary material is provided, including the following steps: (1) mixing a first lithium source with a transition metal precursor to obtain a first mixture, and adding a first dopant to the first mixture to obtain a first doped mixture, where the transition metal precursor includes a nickel element, a cobalt element, and a manganese element, a molar ratio of the nickel element to the cobalt element to the manganese element is (1-x-y):x:y, 0<x≤0.1, 0<y≤0.1, and a molar ratio of a lithium element in the first lithium source to a sum of the nickel element, the cobalt element, and the manganese element in the precursor ranges from (0.3 to 0.7):1; (2) mixing the first doped mixture with a second lithium source to obtain a second mixture, and performing first sintering on the second mixture in an oxygen-containing atmosphere to obtain a first sintered product, where a molar ratio of a lithium element in the second lithium source to the sum of the nickel element, the cobalt element, and the manganese element in the precursor ranges from (0.35 to 0.75):1, and the first lithium source and the second lithium source are allowed to be the same or different; (3) mixing the first sintered product with an optional second dopant, and performing second sintering in an oxygen-containing atmosphere to obtain a second sintered product; and (4) mixing the second sintered product with an optional third dopant, and performing third sintering in an oxygen-containing atmosphere to obtain the ternary material, where the first dopant, the second dopant, and the third dopant include M elements, M is one or more of Zr, Ti, Zn, Mg, Ta, V, Al, Y, W, and B, a ratio of a sum of molar amounts of the M elements in the first dopant, the second dopant, and the third dopant to a sum of molar amounts of the nickel element, the cobalt element, and the manganese element in the precursor is a:1, and 0<a≤0.05.

Compared with a conventional technology, the preparation method for a ternary material provided in the present disclosure has the following effects: First, a stepwise lithium mixing process allows the lithium source and a ternary material precursor to be mixed more uniformly, so that lithium ions are orderly embedded into a crystal lattice of the high-nickel ternary precursor, to alleviate lithium/nickel disordering. Second, a stepwise sintering process allows for a plurality of adjustments to a sintering conditions, which mitigates adverse impact of a continuous high temperature on lithium/nickel disordering in the ternary material, ensures consistent crystallinity inside and outside the ternary material, and is more conducive to formation of the ternary material of a stable and uniform structure. Third, a doping process stabilizes a crystal structure of the ternary material and improves cycle performance.

Specifically, the transition metal precursor is suitable for preparing ternary polycrystalline particles.

In some preferred embodiments of the present disclosure, D50 of the transition metal precursor ranges approximately from 8 µm to 15 µm, and the transition metal precursor exhibits a large secondary spherical agglomerate morphology. Primary particles of the transition metal precursor are small and thin, and an appearance and morphology of secondary spheres may be inherited by sintered ternary polycrystalline particles.

In some preferred embodiments of the present disclosure, a nickel-cobalt-manganese precursor includes at least one of a hydroxide precursor or a carbonate precursor.

In some preferred embodiments of the present disclosure, the first lithium source and the second lithium source each are independently a lithium-containing compound. Preferably, the lithium-containing compound includes one or more of lithium hydroxide, lithium nitrate, lithium carbonate, lithium acetate, lithium chloride, lithium fluoride, and lithium iodide.

In some preferred embodiments of the present disclosure, the first dopant, the second dopant, and the third doping element may be the same or different. The foregoing dopant is a doping element-containing compound. The doping element includes the M element, where M is one or more of Zr, Ti, Zn, Mg, Ta, V, Al, Y, W, and B. Optionally, the doping element-containing compound includes at least one of zinc hydroxide, magnesium hydroxide, molybdenum hydroxide, vanadium hydroxide, germanium hydroxide, aluminum hydroxide, titanium dioxide powder, zirconium oxide powder, tantalum pentoxide, yttrium oxide, boric acid, and tungstic acid. The doping element has a radius similar to that of a transition metal ion and has strong binding energy with oxygen, which makes the crystal structure of the obtained ternary material more stable and orderliness of a crystal lattice higher, and helps reduce lithium/nickel disordering in the high-nickel ternary material.

In some preferred embodiments of the present disclosure, a molar ratio of a lithium element in the lithium compound to the M element in the dopant is 1:(0.001 to 0.05), where the dopant includes a first dopant, a second dopant, and a third dopant. The molar ratio of lithium to the doping element is controlled within the foregoing range, so that effectiveness of element doping can be improved. Proper element doping can reduce a disordering degree of nickel ions in the material, improve stability of a crystal surface structure, effectively suppress crystal lattice distortion generated by the ternary material during charging and discharging, and make deintercalation and intercalation of the lithium ions more rapid during cycling, to improve structural stability and rate performance of the material.

In some preferred embodiments of the present disclosure, the first sintering includes: The first sintering is performed in the oxygen-containing atmosphere, a temperature for the first sintering ranges from 600°C to 800°C, time for the first sintering ranges from 12 h to 24 h, first cooling is performed after the first sintering is finished, a temperature for the first cooling ranges from 20°C to 30°C, a cooling manner is shock cooling, and the first sintered product obtained after completion of the sintering is directly transferred to a room temperature. Performing a first sintering operation on the transition metal precursor helps form a ternary material with better crystallinity. At the same time, a polymer coating layer of the transition metal precursor is carbonized, to increase true density of the material and adjust a specific surface area of the material. A first cooling operation is performed after the first sintering is finished, to control the grain size of the intermediate product, so that the grains of the material are quickly stabilized at a fixed size. This can ensure that the ternary material crystallizes quickly, avoid generation of other impurities, and improve orderliness of the layered structure of the ternary material.

In some preferred embodiments of the present disclosure, the second sintering includes: The second sintering is performed in a pure oxygen atmosphere after the first cooling is finished, a temperature for the second sintering ranges from 300°C to 600°C, time for the second sintering ranges from 10 h to 20 h, second cooling is performed after the second sintering is finished, a temperature for the second cooling ranges from 20°C to 30°C, a cooling manner is shock cooling, and the second sintered product obtained after completion of the sintering is directly transferred to the room temperature. Specifically, the pure oxygen atmosphere environment means space filled with pure oxygen, and the second sintering is performed in space filled with pure oxygen. The first sintering and the second sintering have a same function: to help form the ternary materials with better crystallinity and improve compactness of the ternary material. The first cooling and the second cooling also have a same function: to control the grain size of the intermediate product, so that the grains of the ternary material are quickly stabilized at the fixed size. This increases compaction density when the ternary material is used to prepare an electrode plate by using, and can further ensure that the ternary material crystallizes quickly, avoid generation of other impurities, and improve orderliness of the layered structure of the ternary material.

In some preferred embodiments of the present disclosure, the third sintering includes: The third sintering is performed in a pure oxygen atmosphere after the second cooling is finished, a temperature for the third sintering ranges from 200°C to 400°C, time for the third sintering ranges from 5 h to 10 h, third cooling is performed after the third sintering is finished, a temperature for the third cooling ranges from 20°C to 30°C, a cooling manner is shock cooling, and a third sintered product obtained after completion of the sintering is directly transferred to the room temperature.

It may be understood that a device used for the first sintering, the second sintering, and the third sintering includes one of the following: a tube furnace, a box furnace, a fluidized bed, a rotary kiln, a microwave oven, or a tunnel furnace.

Sintering is performed for three times, so that crystallinity of the ternary material is high. Cooling is performed for three times, to control a grain size of an intermediate product, so that grains of the ternary material are stabilized within a proper size range. This is conducive to improving compaction density of the ternary material, and can further prevent generation of other impurities and improve orderliness of the layered structure of the ternary material. Sintering and cooling are performed for three times, which reduces cooling time of the sintering device, shortens process time, and is further conducive to obtaining the ternary material of a highly ordered layered structure, so that the ternary material has a high specific capacity.

In three sintering processes, a sintering temperature and sintering time decrease in sequence, exhibiting a gradient sintering trend. This can ensure more uniform sites for lithium-ion intercalation into the transition metal precursor. During the first sintering, lithium content in the transition metal precursor is low, and a high temperature is conducive to rapid penetration of the lithium ions. During the second sintering and the third sintering, as an amount of intercalated lithium ions increases, a repulsive force between atoms increases, and difficulty of lithium-ion intercalation increases. If high-temperature sintering continues at this time, lithium/nickel disordering is likely to occur. Therefore, the sintering temperature and the sintering time are subsequently reduced in sequence to alleviate lithium/nickel disordering.

In some preferred embodiments of the present disclosure, a heating rate of the first sintering≤a heating rate of the second sintering≤a heating rate of the third sintering.

In the three sintering processes, the heating rate increases in sequence, exhibiting a gradient upward trend. This can ensure more uniform sites for lithium-ion intercalation into a ternary material precursor. Slow heating during the first sintering ensures a more stable transformation of the transition metal precursor into a crystal phase of the ternary material and avoids crystal lattice distortion. This process is also a process of lithium-ion intercalation into the crystal phase, and slow heating rate helps reduce understandinng of disordering. During the second and the third sintering, the heating rate increases in sequence, which helps increase stability of the crystal phase of the ternary material and reduce the sintering time.

In some preferred embodiments of the present disclosure, the heating rate of the first sintering ranges from 2°C/min to 5°C/min.

In some preferred embodiments of the present disclosure, the heating rate of the second sintering ranges from 5°C/min to 10°C/min.

In some preferred embodiments of the present disclosure, the heating rate of the third sintering ranges from 10°C/min to 20°C/min. The foregoing heating rates are satisfied, so that the obtained ternary material has better performance.

In some preferred embodiments of the present disclosure, in step (1), a gelling agent is further allowed to be added to the first mixture. An adding sequence of the gelling agent and the dopant is not limited. The gelling agent may be added first to be mixed with the first mixture and then the dopant is added, or the dopant may be added first to be mixed with the first mixture and then the gelling agent is added, or the gelling agent and the dopant may be added simultaneously to be mixed with the first product.

In some preferred embodiments of the present disclosure, the gelling agent includes a solvent, a complexing agent, and a polymer monomer. A mass percentage of the solvent in the gelling agent ranges from 10 wt% to 50 wt%, and the solvent includes at least one of anhydrous ethanol or deionized water. The mass percentage of the solvent in the gelling agent is within the foregoing range, so that the lithium source can be effectively dispersed, and the lithium ions can be uniformly dispersed on a surface of the transition metal precursor, which facilitates lithiation.

In some preferred embodiments of the present disclosure, a mass percentage of the complexing agent in the gelling agent ranges from 0.2 wt% to 2 wt%, and the complexing agent includes sodium dodecyl sulfate (SDS). The complexing agent facilitates binding of the gelling agent with the lithium source. In addition, the mass percentage of the complexing agent is within the foregoing range, which is conducive to dispersion of the lithium source in the gelling agent and facilitates formation of a more stable ternary material.

In some preferred embodiments of the present disclosure, a volume ratio of the polymer monomer to the solvent ranges from (0.1 to 0.4):1, and the polymer monomer includes at least one of methyl methacrylate, styrene, or acrylonitrile, preferably methyl methacrylate. The polymer monomer is a precursor for forming a gel. The volume ratio of the polymer monomer to the solvent is controlled within the foregoing range, which is conducive to formation of a gel with better coating performance and facilitates crystallinity improvement after lithiation. In a mixing process, methyl methacrylate polymerizes into polymethyl methacrylate, which provides higher dispersibility for the lithium source and better surface binding with the surface of the metal precursor. At the same time, residual carbon content of a sintered finished product of polymethyl methacrylate ranges from 0.1% wt to 3% wt. A residual carbon rate within this range is conducive to further improving rate performance.

In some preferred embodiments of the present disclosure, in a process of adding the gelling agent and the optional dopant to the first mixture to obtain the gel particles, proper heating treatment may be performed at a heating temperature of 40°C to 80°C. This temperature range is conducive to polymerization reaction.

According to a third aspect of the present disclosure, a positive electrode plate is provided, including the foregoing ternary material, or the ternary material prepared based on the preparation method for the foregoing ternary material.

The positive electrode plate prepared by using the foregoing ternary material is used in a battery, so that the battery has high energy density and a high cycle life.

In some preferred embodiments of the present disclosure, compaction density of the positive electrode plate ranges from 3 g/cm³ to 3.7 g/cm³.

In the positive electrode plate prepared by using the ternary material prepared in the present disclosure, the material has a complete layered structure and high compaction density. When the positive electrode plate is used in the battery, energy density and the cycle life of the battery can be improved.

According to a fourth aspect of the present disclosure, a positive electrode plate is provided, including a ternary material. A chemical formula of the ternary material is LiNi_{1-x-y}CoₓMn_{y}MₐO₂, where 0<x≤0.1, 0<y≤0.1, 0<a≤0.05, and M is one or more of Zr, Ti, Zn, Mg, Ta, V, Al, Y, W, and B. The ternary material includes polycrystalline particles. There are a (108) diffraction peak at a diffraction angle 2θ of (64±0.5)° and a (110) diffraction peak at a diffraction angle 2θ of (65±0.5)° in an X-ray diffraction spectrum of the positive electrode plate. The (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$. The FWHM (108) is a full width at half maximum of the (108) diffraction peak at the diffraction angle 2θ of (64±0.5)°, and the FWHM (110) is a full width at half maximum of the (110) diffraction peak at the diffraction angle 2θ of (65±0.5)°.

According to a fifth aspect of the present disclosure, a lithium-ion battery is provided, including the foregoing positive electrode plate. The lithium-ion battery in the present disclosure is used, to have high energy density and a high cycle life.

The lithium-ion battery further includes a negative electrode plate, a diaphragm, and an electrolyte. The negative electrode plate includes a current collector and a negative electrode active material layer coated on at least one side of the current collector, where the negative electrode active material layer includes a negative electrode active material, a conductive agent, and a binder.

The negative electrode active material includes a carbon-based material, where the carbon-based material includes one or more of artificial graphite, natural graphite, a hard carbon material, or a soft carbon material.

The negative electrode active material further includes one or more of a silicon-based material, a tin-based material, and a lithium titanate material. The silicon-based material may be one or a combination of elemental silicon, silicon oxide (SiOₓ, where 0<x<2), and silicon alloys. The tin-based material may be one or a combination of elemental tin, tin oxide (SnOₓ, where 0<x≤2), and tin alloys. The lithium titanate material may be Li₄Ti₅O₁₂ or the like.

The binder may be one or a combination of styrene butadiene rubber (Styrene Butadiene Rubber, SBR), carboxymethyl cellulose (Carboxymethyl Cellulose, CMC), polyacrylic acid (Polyacrylic Acid, PAA), Polyacrylic Ethylene Acrylic Acid (Polyacrylic Ethylene Acrylic Acid, PEAA), sodium alginate, carboxymethyl chitosan, polyacrylonitrile (Polyacrylonitrile, PAN), and polyvinyl alcohol (Polyvinyl alcohol, PVA).

The current collector may be any one of copper foil, carbon-coated copper foil, polymer-coated copper foil, carbon cloth, a carbon nanotube film, or carbon paper.

The diaphragm may be a composite membrane made of one or more of polyethylene, polypropylene, and polyvinylidene fluoride.

The electrolyte is an organic solvent in which carrier ions are dissolved. The electrolyte is not limited in the present disclosure, and may be prepared as required based on an actual situation.

According to a sixth aspect of the present disclosure, a electric device is provided, including the foregoing lithium-ion battery.

The electric device prepared by using the lithium-ion battery in the present disclosure can have higher market competitiveness.

In some implementations of the present disclosure, the electric device includes, but is not limited to, a mobile phone, a laptop computer, a tablet computer, a wearable electronic device such as a smartwatch, an electronic cigarette, a new energy vehicle, an electric moped, or the like.

The present disclosure is further described in detail below through examples.

### Example 1

This example illustrates the ternary material and the preparation method therefor that are disclosed in the present disclosure, where the preparation method includes the following steps:
(1) A Ni_{0.90}Co_{0.05}Mn_{0.05} hydroxide precursor was used, and LiOH was used as a lithium source. Lithium hydroxide was first added at a ratio of lithium to a transition metal element of 0.4, and mixed to obtain a first mixture. Titanium dioxide powder (calculated as 1500 ppm based on molar content of a titanium element), zirconium oxide powder (calculated as 2500 ppm based on molar content of a zirconium element), tantalum pentoxide (calculated as 1000 ppm based on molar content of a tantalum element), and yttrium oxide powder (calculated as 1000 ppm supplementary content based on molar content of a yttrium element) were then added to the first mixture and mixed at a high speed, where mixing time was 8 h. The mixture was then poured into a ball mill and ball-milled with anhydrous ethanol for 8 h. Then, 0.4 wt% sodium dodecyl sulfate, 30 wt% H₂O, and methyl methacrylate at a 0.25 volume ratio to water were added to the mixture and stirred for 1 h to obtain a mixture of a gel-like coated precursor with lithium salt and an additive agent. The mixture was heated to 80°C and maintained at this temperature for 1 h to collect and obtain gel particles.
(2) Then, the gel particles were mixed with LiOH again at a high speed at a ratio of lithium to the transition metal element of 0.63, and first sintering was performed in an oxygen atmosphere at a heating rate of 3°C/min and a sintering temperature of 700°C for 15 h. Then, sieving was performed to obtain a first sintered product.
(3) The first sintered product was mixed with aluminum oxide powder (calculated as 1500 ppm based on molar content of an aluminum element), and second sintering was performed in an oxygen atmosphere at a heating rate of 8°C/min and a sintering temperature of 500°C for sintering time of 12 h. Sieving was performed to obtain a second sintered product.
(4) The second sintered product was mixed with boric acid (calculated as 1000 ppm based on molar content of a boron element) and tungstic acid powder (calculated as 1000 ppm based on molar content of a tungsten element), and third sintering was performed in an oxygen atmosphere at a heating rate of 15°C/min at 350°C for 8 h, to obtain a final ternary material.

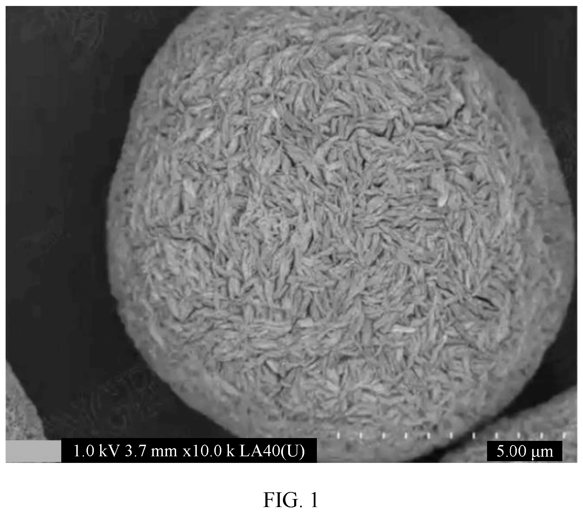

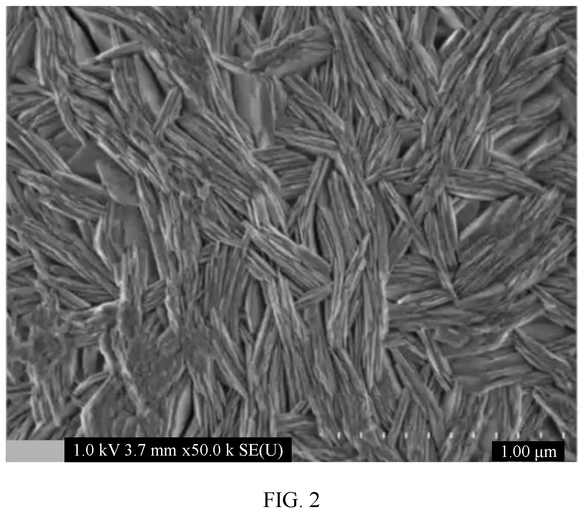

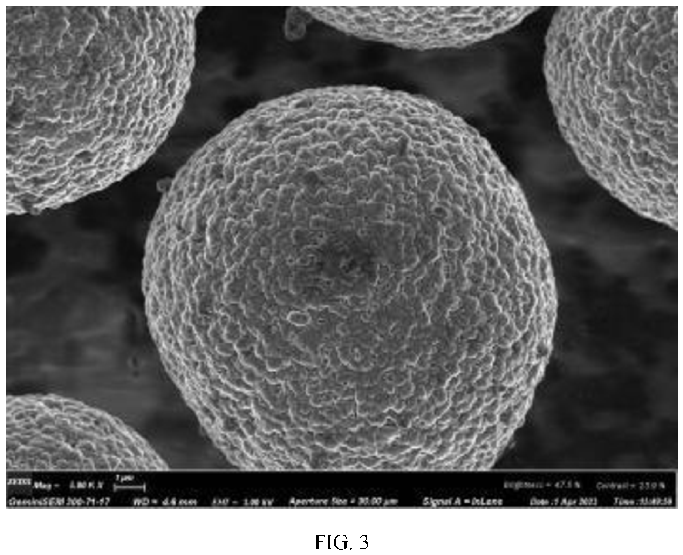

D50 of the Ni_{0.90}Co_{0.05}Mn_{0.05} hydroxide precursor is 11 µm. SEM images of the Ni_{0.90}Co_{0.05}Mn_{0.05} hydroxide precursor at different magnifications are shown in FIG. 1 and FIG. 2. In a low-magnification SEM (FIG. 1), the Ni_{0.90}Co_{0.05}Mn_{0.05} hydroxide precursor includes secondary spherical particles formed by accumulation of primary particles. In a high-magnification SEM (FIG. 2), the primary particles are long and thin. D50 of the obtained finished ternary material (LiNi_{0.90}Co_{0.05}Mn_{0.05}O₂) is 11 µm. An SEM of the obtained finished ternary material is shown in FIG. 3. LiNi_{0.90}Co_{0.05}Mn_{0.05}MO₂ includes secondary spherical particles formed by accumulation of primary particles.

An XRD test was performed on the finished ternary material. A copper-target X-ray generator was used for scanning at a scanning rate of 3°/min in a range of 10° to 80°. An XRD spectrum. Peak positions and full widths at half maximum of a (108) diffraction peak and a (110) diffraction peak were analyzed based on the XRD spectrum. Data is listed in Table 1.

### Example 2

A difference between Example 2 and Example 1 lies in that titanium dioxide and tantalum pentoxide were not added during the sintering in step (1).

### Example 3

A difference between Example 3 and Example 1 lies in that aluminum oxide was not added in step (2).

### Example 4

A difference between Example 4 and Example 1 lies in that tungstic acid was not added in step (4).

### Example 5

A difference between Example 5 and Example 1 lies in that tantalum pentoxide and yttrium oxide powder were not added during the sintering in step (1), aluminum oxide was not added in step (2), and tungstic acid was not added in step (4).

### Example 6

A difference between Example 6 and Example 5 lies in that Example 6 is different from Example 1 in that a precursor at a ratio of Ni_{0.88}Co_{0.06}Mn_{0.06} was used, the first sintering was performed at a temperature of 750°C for 10 h, and the second sintering was performed at a temperature of 600°C for 8 h.

### Example 7

A difference between Example 7 and Example 5 lies in that a cobalt-free precursor at a ratio of Ni_{0.83}Co_{0.12}Mn_{0.05} was used, the first sintering was performed at a temperature of 820°C for 14 h, and the second sintering was performed at a temperature of 660°C for 8 h.

### Example 8

A difference between Example 8 and Example 5 lies in that in step (1), lithium hydroxide was added at a ratio of lithium to the transition metal element of 0.6, and in step (2), lithium hydroxide was added at a ratio of lithium to the transition metal element of 0.46.

### Example 9

A difference between Example 9 and Example 5 lies in that in step (1), lithium hydroxide was added at a ratio of lithium to the transition metal element of 0.9, and in step (2), lithium hydroxide was added at a ratio of lithium to the transition metal element of 0.15.

### Example 10

A difference between Example 10 and Example 5 lies in that a same heating rate of 10°C/min was used for the three sintering processes.

### Example 11

A difference between Example 11 and Example 5 lies in that a temperature for the second sintering was higher than a temperature for the first sintering, and was 750°C.

### Comparative Example 1

A difference between Comparative Example 1 and Example 1 lies in that no dopant was added.

### Comparative Example 2

A difference between Comparative Example 2 and Example 1 lies in that stepwise lithium source addition in Example 1 was not performed, and in a first mixing process, lithium hydroxide was added at a ratio of lithium to the transition metal element of 1.05.

### Comparative Example 3

A difference between Comparative Example 3 and Example 6 lies in that stepwise sintering in Example 6 was not performed, and sintering was performed once at a sintering temperature of 800°C for 33 h.

### Comparative Example 4

A difference between Comparative Example 4 and Example 6 lies in that a precursor at a ratio of Ni_{0.78}Mn_{0.22} was used, the first sintering was performed at a temperature of 750°C for 14 h, the second sintering was performed at a temperature of 600°C for 8 h, the third sintering was performed at a temperature of 300°C for 4 h, gel coating treatment, stepwise lithium addition, and doping treatment in Example 1 were not performed, and lithium hydroxide was added at a ratio of lithium to the transition metal element of 1.05.

Data of residual carbon content of ternary materials prepared in Examples 1 to 11 and Comparative Examples 1 to 4 was tested by using a CS analyzer.

Specific data of FWHMs (108), FWHMs (110), 2θ (108), and 2θ (110) in XRD spectra that were of the ternary materials prepared in Examples 1 to 11 and Comparative Examples 1 to 4 and that were obtained through XRD tests were recorded in Table 1. XRD data of the full widths at half maximum and peak positions were obtained through analysis of original XRD test files by processing software MDIJade 6. The specific data are shown in Table 1.

**Table 1: Partial data of ternary materials in Examples 1 to 11 and Comparative Examples 1 to 4**

| Group | Molecular formula | ICP test result of doped and coated elements | FWHM (108) | FWHM (110) | 2θ (110) | 2θ (108) | FWHM(108) + FWHM(110) 2θ(110) - 2θ(108) |
|---|---|---|---|---|---|---|---|
| Example 1 | LiNi_{0.90}Co_{0.05} Mn_{0.05}O₂ | Ti 1401 | 0.192 | 0.186 | 64.831 | 64.431 | 0.945 |
| | | Zr 2411 | | | | | |
| | | Ta 903 | | | | | |
| | | Y 869 | | | | | |
| | | Al 1366 | | | | | |
| | | B 869 | | | | | |
| | | W 881 | | | | | |
| Example 2 | LiNi_{0.90}Co_{0.05} Mn_{0.05}O₂ | Zr 2339 | 0.196 | 0.193 | 64.783 | 64.371 | 0.944 |
| | | Y 888 | | | | | |
| | | Al 1325 | | | | | |
| | | B 884 | | | | | |
| | | W 843 | | | | | |
| Example 3 | LiNi_{0.90}Co_{0.05} Mn_{0.05}O₂ | Ti 1404 | 0.198 | 0.192 | 64.771 | 64.359 | 0.947 |
| | | Zr 2425 | | | | | |
| | | Ta 904 | | | | | |
| | | Y 878 | | | | | |
| | | B 916 | | | | | |
| | | W 877 | | | | | |
| Example 4 | LiNi_{0.90}CO_{0.05} Mn_{0.05}O₂ | Ti 1411 | 0.198 | 0.196 | 64.768 | 64.35 | 0.943 |
| | | Zr 2471 | | | | | |
| | | Ta 877 | | | | | |
| | | Y 885 | | | | | |
| | | Al 1315 | | | | | |
| | | B 931 | | | | | |
| Example 5 | LiNi_{0.90}CO_{0.05} Mn_{0.05}O₂ | Ti 1423 | 0.192 | 0.188 | 64.796 | 64.38 | 0.913 |
| | | Zr 2471 | | | | | |
| | | B 931 | | | | | |
| Example 6 | LiNi_{0.88}Co_{0.06} Mn_{0.06}O₂ | Ti 1411 | 0.191 | 0.185 | 64.902 | 64.466 | 0.862 |
| | | Zr 2436 | | | | | |
| | | B 915 | | | | | |
| Example 7 | LiNi_{0.83}Co_{0.12} Mn_{0.05}O₂ | Ti 1432 | 0.18 | 0.19 | 64.918 | 64.471 | 0.828 |
| | | Zr 2425 | | | | | |
| | | B 913 | | | | | |
| Example 8 | LiNi_{0.90}CO_{0.05} Mn_{0.05}O₂ | Ti 1395 | 0.195 | 0.199 | 64.771 | 64.358 | 0.954 |
| | | Zr 2414 | | | | | |
| | | B 901 | | | | | |
| Example 9 | LiNi_{0.90}CO_{0.05} Mn_{0.05}O₂ | Ti 1403 | 0.193 | 0.203 | 64.752 | 64.345 | 0.973 |
| | | Zr 2328 | | | | | |
| | | B 882 | | | | | |
| Example 10 | LiNi_{0.90}CO_{0.05} Mn_{0.05}O₂ | Ti 1345 | 0.207 | 0.197 | 64.758 | 64.339 | 0.964 |
| | | Zr 2456 | | | | | |
| | | B 870 | | | | | |
| Example 11 | LiNi_{0.90}CO_{0.05} Mn_{0.05}O₂ | Ti 1466 | 0.206 | 0.202 | 64.757 | 64.34 | 0.978 |
| | | Zr 2473 | | | | | |
| | | Al 1309 | | | | | |
| | | B 899 | | | | | |
| Comparative Example 1 | LiNi_{0.90}Co_{0.05} Mn_{0.05}O₂ | | 0.23 | 0.21 | 64.77 | 64.341 | 1.03 |
| Comparative Example 2 | LiNi_{0.90}Co_{0.05} Mn_{0.05}O₂ | Ti 1444 | 0.21 | 0.22 | 64.758 | 64.336 | 1.02 |
| | | Zr 2338 | | | | | |
| | | Ta 930 | | | | | |
| | | Y 879 | | | | | |
| | | Al 1320 | | | | | |
| | | B 876 | | | | | |
| | | W 865 | | | | | |
| Comparative Example 3 | LiNi_{0.88}Co_{0.06} Mn_{0.06}O₂ | Ti 1453 | 0.174 | 0.161 | 64.858 | 64.436 | 0.794 |
| | | Zr 2397 | | | | | |
| | | B 930 | | | | | |
| Comparative Example 4 | LiNi_{0.78}Mn_{0.22} O₂ | Ti 1373 | 0.176 | 0.165 | 64.859 | 64.442 | 0.818 |
| | | Zr 2441 | | | | | |
| | | Al 1295 | | | | | |
| | | B 893 | | | | | |

Positive electrode plates S including ternary materials in Examples 1 and 6 and Comparative Examples 1 and 3 were selected. Specific data of FWHMs (108), FWHMs (110), 2θ (108), and 2θ (110) in XRD spectra that were of the positive electrode plates and that were obtained through XRD tests were recorded in Table 2. XRD data of the full widths at half maximum and peak positions were obtained through analysis of original XRD test files by processing software MDIJade 6. The specific data are shown in Table 2.

**Table 2: Partial data of positive electrode plates**

| Group | FWHM (108) | FWHM (110) | 2θ (110) | 2θ (108) | $\frac{FWHM \left(108\right) + FWHM \left(110\right)}{2 θ \left(110\right) - 2 θ \left(108\right)}$ |
|---|---|---|---|---|---|
| Example S1 | 0.194 | 0.191 | 64.815 | 64.412 | 0.955 |
| Example S6 | 0.192 | 0.189 | 64.914 | 64.478 | 0.874 |
| Comparative Example S1 | 0.22 | 0.22 | 64.73 | 64.32 | 1.07 |
| Comparative Example S3 | 0.202 | 0.201 | 64.758 | 64.323 | 0.926 |

### Performance test:

The ternary materials prepared in Examples 1 to 11 and Comparative Examples 1 to 4 were used to prepare positive electrode plates and batteries, and the following tests were performed.

Specific capacity test: The foregoing ternary material, PVDF, and SP were mixed at a ratio of 96:3:1 by using NMP as a solvent for 2 h to form a stable and uniform positive electrode slurry. The positive electrode slurry was coated on aluminum foil by using a coating machine, dried, and cold-pressed to obtain a positive electrode plate with compaction density of 3.6 g/cm³, which was then dried at 120°C for 24 h. A lithium plate was used as a negative electrode, a cellgard 2300 porous membrane was used as a diaphragm, and a 1 mol/L LiPF₆+DMC (at a volume ratio of 1:1) mixed electrolyte was used as an electrolyte, to assemble a button battery 2032 and perform the test. Charge and discharge tests were performed at a rate of 0.2 C, and a specific capacity of a third discharge test was taken as a specific capacity of the ternary material.

Deionized water was used as a solvent, 95 wt% of a negative electrode active material graphite, 2 wt% of a binder SBR, 2 wt% of a conductive agent graphite, and 1 wt% of a thickener CMC were added to the deionized water to prepare a negative electrode slurry. The negative electrode slurry was coated on copper foil, dried, and cold-pressed, to obtain compaction density of 1.7 g/cm³.

Battery preparation: The foregoing prepared positive electrode plate, a negative electrode plate, and the diaphragm were used to prepare a bare cell based on a conventional preparation process. The bare cell was dried, injected with the electrolyte, and packaged, to finally prepare a battery.

A negative electrode active material artificial graphite, conductive carbon black, a thickener (CMC), and a binder (SBR) were mixed at a ratio of 96:1:1:2. A powder material and deionized water were stirred by using a homogenizer to form a negative electrode slurry, which was then uniformly coated on copper foil to obtain the negative electrode plate.

Cycle performance test at a room temperature: A cycle test at a room temperature of 25°C was performed on a formed cell, and charge and discharge tests were performed at 0.5 C/0.5 C. Discharge capacity retention of the battery after 500 cycles was recorded.

Direct current internal resistance (DCIR) test: A cycle test at a high temperature of 45°C was performed on the formed cell, and charge and discharge tests were performed at 1 C/1 C. DCIR retention of the battery after 500 cycles was recorded.

**Table 2: Performance data of Examples 1 to 11 and Comparative Examples 1 to 4**

| Group | Specific capacity (mAh/g) of a ternary material at 4.3 V | DCIR @500 cycles | Battery capacity retention rate @500 cycles |
|---|---|---|---|
| Example 1 | 213.81 | 29.13% | 91.21% |
| Example 2 | 216.33 | 30.41% | 91.90% |
| Example 3 | 214.35 | 31.15% | 90.06% |
| Example 4 | 213.69 | 30.56% | 91.78% |
| Example 5 | 216.66 | 28.36% | 93.92% |
| Example 6 | 210.98 | 27.06% | 92.34% |
| Example 7 | 200.12 | 34.79% | 90.11% |
| Example 8 | 213.04 | 33.05% | 88.72% |
| Example 9 | 204.95 | 34.05% | 89.61% |
| Example 10 | 202.89 | 32.12% | 88.46% |
| Example 11 | 203.87 | 32.43% | 89.27% |
| Comparative Example 1 | 192.23 | 42.48% | 84.65% |
| Comparative Example 2 | 194.45 | 39.66% | 85.92% |
| Comparative Example 3 | 180.1 | 36.58% | 86.63% |
| Comparative Example 4 | 170.67 | 41.79% | 88.57% |

It can be seen from the data in Table 3 that the ternary material provided in embodiments of the present disclosure meets crystal structure characteristics required by the present disclosure, and a discharge capacity, cycle performance, and DCIR of the obtained battery are improved compared to those in the comparative examples.

The foregoing descriptions are merely preferred embodiments of the present disclosure, but are not intended to limit the present disclosure. Any modification, equivalent replacement, or improvement made without departing from the spirit and principle of the present disclosure shall fall within the protection scope of the present disclosure.

## Claims

1. A ternary material, wherein a chemical formula of the ternary material is LiNi_{1-x-y}CoₓMn_{y}MₐO₂, 0<x≤0.1, 0<y≤0.1, 0<a≤0.05, and M is one or more of Zr, Ti, Zn, Mg, Ta, V, Al, Y, W, and B;
the ternary material comprises polycrystalline particles;
there are a (108) diffraction peak at a diffraction angle 2θ of (64±0.5)° and a (110) diffraction peak at a diffraction angle 2θ of (65±0.5)° in an X-ray diffraction spectrum of the ternary material;
the (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$; and
the FWHM (108) is a full width at half maximum of the (108) diffraction peak at the diffraction angle 2θ of (64±0.5)°, and the FWHM (110) is a full width at half maximum of the (110) diffraction peak at the diffraction angle 2θ of (65±0.5)°.

2. The ternary material according to claim 1, wherein the chemical formula of the ternary material is LiNi_{1-x-y}CoₓMn_{y}MₐO₂, 0<x≤0.1, 0<y≤0.05, 0<a≤0.05, and M is one or more of Zr, Ti, Zn, Mg, Ta, V, Al, Y, W, and B.

3. The ternary material according to claim 1 or 2, wherein the (108) diffraction peak and the (110) diffraction peak satisfy the following relational expression: $0.85 < \frac{FWHM \left(108\right) + FWHM \left(110\right)}{2 θ \left(110\right) - 2 θ \left(108\right)} < 0.95$.

4. The ternary material according to any one of claims 1 to 3, wherein in the X-ray diffraction spectrum of the ternary material, the full width at half maximum FWHM (108) of the (108) diffraction peak ranges from 0.1 to 0.2; and/or
the full width at half maximum FWHM (110) of the (110) diffraction peak ranges from 0.1 to 0.2.

5. A preparation method for the ternary material according to any one of claims 1 to 4, wherein the method comprises the following steps:
(1) mixing a first lithium source with a transition metal precursor to obtain a first mixture, and adding a first dopant to the first mixture to obtain a first doped mixture, wherein the transition metal precursor comprises a nickel element, a cobalt element, and a manganese element, a molar ratio of the nickel element to the cobalt element to the manganese element is (1-x-y):x:y, 0<x≤0.1, 0<y≤0.1, and a molar ratio of a lithium element in the first lithium source to a sum of the nickel element, the cobalt element, and the manganese element in the precursor ranges from (0.3 to 0.7):1;
(2) mixing the first doped mixture with a second lithium source to obtain a second mixture, and performing first sintering on the second mixture in an oxygen-containing atmosphere to obtain a first sintered product, wherein a molar ratio of a lithium element in the second lithium source to the sum of the nickel element, the cobalt element, and the manganese element in the precursor ranges from (0.35 to 0.75):1, and the first lithium source and the second lithium source are allowed to be the same or different;
(3) mixing the first sintered product with an optional second dopant, and performing second sintering in an oxygen-containing atmosphere to obtain a second sintered product; and
(4) mixing the second sintered product with an optional third dopant, and performing third sintering in an oxygen-containing atmosphere to obtain the ternary material, wherein the first dopant, the second dopant, and the third dopant comprise M elements, M is one or more of Zr, Ti, Zn, Mg, Ta, V, Al, Y, W, and B, a ratio of a sum of molar amounts of the M elements in the first dopant, the second dopant, and the third dopant to a sum of molar amounts of the nickel element, the cobalt element, and the manganese element in the precursor is a:1, and 0<a≤0.05.

6. The method according to claim 5, wherein the first sintering comprises: the first sintering is performed in the oxygen-containing atmosphere, a temperature for the first sintering ranges from 600°C to 800°C, time for the first sintering ranges from 12 h to 24 h, and first cooling is performed after the first sintering is finished; and/or
the second sintering comprises: the second sintering is performed in a pure oxygen atmosphere after the first cooling is finished, a temperature for the second sintering ranges from 300°C to 600°C, time for the second sintering ranges from 10 h to 20 h, and second cooling is performed after the second sintering is finished; and/or
the third sintering comprises: the third sintering is performed in a pure oxygen atmosphere after the second cooling is finished, a temperature for the third sintering ranges from 200°C to 400°C, time for the third sintering ranges from 5 h to 10 h, and third cooling is performed after the third sintering is finished, wherein
a heating rate of the first sintering≤a heating rate of the second sintering≤a heating rate of the third sintering.

7. The method according to claim 5 or 6, wherein the heating rate of the first sintering ranges from 2°C/min to 5°C/min; and/or the heating rate of the second sintering ranges from 5°C/min to 10°C/min; and/or the heating rate of the third sintering ranges from 10°C/min to 20°C/min.

8. The method according to any one of claims 5 to 7, wherein a gelling agent is further allowed to be added to the first mixture, the gelling agent comprises a solvent, a complexing agent, and a polymer monomer, and based on total mass of the gelling agent, a mass percentage of the solvent ranges from 10 wt% to 50 wt%, a mass percentage of the complexing agent ranges from 0.2 wt% to 2 wt%, and a volume ratio of the polymer monomer to the solvent ranges from (0.1 to 0.4):1.

9. A lithium-ion battery, comprising a positive electrode plate, wherein the positive electrode plate comprises the ternary material according to any one of claims 1 to 4, or the ternary material prepared based on the method according to any one of claims 6 to 8.

10. The lithium-ion battery according to claim 9, wherein
a chemical formula of the ternary material is LiNi_{1-x-y}CoₓMn_{y}MₐO₂, 0<x≤0.1, 0<y≤0.1, 0<a≤0.05, and M is one or more of Zr, Ti, Zn, Mg, Ta, V, Al, Y, W, and B;
the ternary material comprises polycrystalline particles;
there are a (108) diffraction peak at a diffraction angle 2θ of (64±0.5)° and a (110) diffraction peak at a diffraction angle 2θ of (65±0.5)° in an X-ray diffraction spectrum of the positive electrode plate;
the (108) diffraction peak and the (110) diffraction peak satisfy the following relational expression: $0.8 < \frac{FWHM \left(108\right) + FWHM \left(110\right)}{2 θ \left(110\right) - 2 θ \left(108\right)} < 0.98$;
the FWHM (108) is a full width at half maximum of the (108) diffraction peak at the diffraction angle 2θ of (64±0.5)°; and
the FWHM (110) is a full width at half maximum of the (110) diffraction peak at the diffraction angle 2θ of (65±0.5)°.

11. A electric device, comprising the lithium-ion battery according to claim 9 or 10.
